# EUROPEAN PATENT APPLICATION

(11) **EP 4 775 347 A1**
(43) Date of publication of application: **15.07.2026**
(21) Application number: 24939053.5
(22) Date of filing: 31.12.2024
(51) Int. Cl.: B23K 26/21, B23K 26/70

(54) **LASER WELDING ASSEMBLY AND LASER WELDING DEFECT DETECTION METHOD AND SYSTEM**

(30) Priority: 22.11.2024 CN 202411677021
(71) Applicant: Eve Energy Co., Ltd., Huizhou, Guangdong 516006 (CN)
(72) Inventor: XIONG, Fei, Wuhan, Hubei 430074 (CN); ZHANG, Jin, Wuhan, Hubei 430074 (CN)
(74) Representative: Nederlandsch Octrooibureau
(86) International application number: PCT/CN2024/144073
(87) International publication number: WO 2026/107947

(57) **Abstract**

The invention discloses a laser welding assembly, a laser welding defect detection method and system. The laser welding assembly includes a welding kit and a temperature sensor. The welding kit has a laser incident through-hole. The temperature sensor is disposed between a first end of the welding kit and a busbar. The temperature sensor has an end connected to the first end of the welding kit and another end abut with the busbar. A surface of the busbar away from the temperature sensor abuts with a cell post.

## Description

### CROSS-REFERENCE TO RELATED APPLICATION

This application claims priority to Chinese Patent Application No. 202411677021.7, filed with China National Intellectual Property Administration on November 22, 2024, the entire disclosure of which is incorporated herein by reference.

### FIELD

The invention relates to the field of laser welding technologies, and particularly, to a laser welding assembly, a laser welding defect detection method and a system.

### BACKGROUND

Laser welding between an aluminum busbar and a cell post can not only achieve deeper fusion but also ensure stable welding quality and a firm welding seam. Furthermore, it can effectively avoid damage to surrounding sensitive components, thereby improving overall stability and safety of a battery.

In the related art, in order to ensure quality after the laser welding between the aluminum busbar and the cell post, destructive testing is typically required on welded samples to ensure firmness of a welding seam between the aluminum busbar and the cell post.

### SUMMARY

### Technical problem

Although laser welding can verify firmness of welding seams between aluminum busbars and cell posts, it cannot guarantee that welding seams between all welded aluminum busbars and cell posts are firm.

### Technical solutions

The invention provides a laser welding assembly, a laser welding defect detection method and system, which can test firmness of the welding seam between the aluminum busbar and the cell post during welding. In this way, a yield rate of laser welding between the busbar and the cell post can be improved, and cost of the laser welding between the busbar and the cell post can be lowered.

In a first aspect, the invention provides a laser welding assembly. The laser welding assembly includes a welding kit and a temperature sensor. The welding kit has a laser incident through-hole extending through a first end and a second end of the welding kit. The first end and the second end are opposite ends of the welding kit. The temperature sensor is disposed between the first end of the welding kit and a busbar. The temperature sensor has an end connected to the first end of the welding kit and another end abutting with the busbar. A surface of the busbar away from the temperature sensor abuts with a cell post.

In a second aspect, the invention also provides a laser welding defect detection method. The laser welding defect detection method is applied in the laser welding assembly according to the first aspect of the invention. The laser welding defect detection method includes:
obtaining a first temperature for laser welding between the busbar and the cell post; and
determining, when the first temperature is not within a predetermined temperature range, that a welding defect exists between the busbar and the cell post.
In a third aspect, the invention also provides a laser welding detection system. The laser welding detection system is applied to the laser welding defect detection method according to the second aspect of the invention.

### Beneficial effects

The laser welding assembly according to the invention includes the welding kit and the temperature sensor. The welding kit has the laser incident through-hole extending through the first end and the second end of the welding kit that are opposite to each other. The temperature sensor is disposed between the first end of the welding kit and the busbar. The end of the temperature sensor is connected to the first end of the welding kit, and the other end of the temperature sensor abuts with the busbar. The surface of the busbar away from the temperature sensor abuts with the cell post. Thus, during the laser welding between the busbar and the cell post, the firmness of the welding seam between the busbar and the cell post can be determined in time based on temperature information detected by the temperature sensor, and corresponding treatment can be carried out. In this way, the yield rate of the laser welding between the busbar and the cell post can be greatly improved, and the cost of the laser welding between the busbar and the cell post can be lowered.

For the laser welding defect detection method according to the invention, the first temperature for the laser welding between the busbar and the cell post is obtained, and when the first temperature is not within the predetermined temperature range, it is determined that the welding defect exists between the busbar and the cell post. Thus, during the laser welding between the busbar and the cell post, the firmness of the welding seam between the busbar and the cell post can be determined in time based on the temperature information detected by the temperature sensor, and the corresponding treatment can be carried out. In this way, the yield rate of the laser welding between the busbar and the cell post can be improved, and the cost of the laser welding between the busbar and the cell post can be lowered.

### BRIEF DESCRIPTION OF THE DRAWINGS

FIG. 1 is a structural view of a laser welding assembly according to the invention from a first perspective.
FIG. 2 is a structural view of a laser welding assembly according to the invention from a second perspective.
FIG. 3 is a structural view of a laser welding assembly according to the invention from a third perspective.
FIG. 4 is a cross-sectional view of a laser welding assembly according to the invention.
FIG. 5 is a top view of a laser welding assembly according to the invention.
FIG. 6 is an exploded view of a laser welding assembly according to the invention.
FIG. 7 is a schematic structural view of a temperature sensor according to the invention.
FIG. 8 is a schematic structural view of a thermal insulation member according to the invention.
FIG. 9 is another schematic structural view of a thermal insulation member according to the invention.
FIG. 10 is a schematic structural diagram of a welding kit according to the invention.
FIG. 11 is a top view of a laser welding assembly on a cell according to the invention.
FIG. 12 is a schematic view of a busbar and a cell post after welding according to the invention.
FIG. 13 is a connection relationship diagram of a laser welding assembly according to the invention.
FIG. 14 is a schematic flowchart of a laser welding defect detection method according to the invention.
FIG. 15 is a temperature curve at a welding position between a busbar and a cell post according to the invention.
FIG. 16 is a schematic block diagram of a laser welding defect detection system according to the invention.

Description of reference numerals:
101, welding kit; 1011, laser incident through-hole; 1012, connection portion; 1013, abutment portion; 102, temperature sensor; 103, thermal insulation member; 1031, first annular groove; 1032, second annular groove; 104, control module; 105, laser; 106, galvanometer; 107, laser beam; 108, human-machine interface; 109, warning light; 201, busbar; 2011, post region; 300, cell; 301, cell post; 302, cell cover plate; 400, welding point.

### DETAILED DESCRIPTION OF THE EMBODIMENTS

In the related art, when detecting a laser welding defect between a busbar and a cell post, two-dimensional detection is typically performed on a welding position between an aluminum busbar and the cell post after welding to determine a weld penetration and a weld width, or visual defect detection is performed by means of photographing.

For testing firmness of a welding seam between the aluminum busbar and the cell post after the welding, a small number of samples are typically taken from finished products to test the firmness of the welding seam between the aluminum busbar and the cell post after the welding. Moreover, the samples need to be destroyed during the test, which not only fails to determine the firmness of the welding seam of each of the welded products, but also results in high testing cost.

To solve problems of poor firmness of the welding seams of the products and the high testing cost, the invention provides a laser welding assembly, a laser welding defect detection method and system, which can test the firmness of the welding seam between the aluminum busbar and the cell post during welding, and can thus avoid poor firmness of the welding seam between the aluminum busbar and the cell post after the welding.

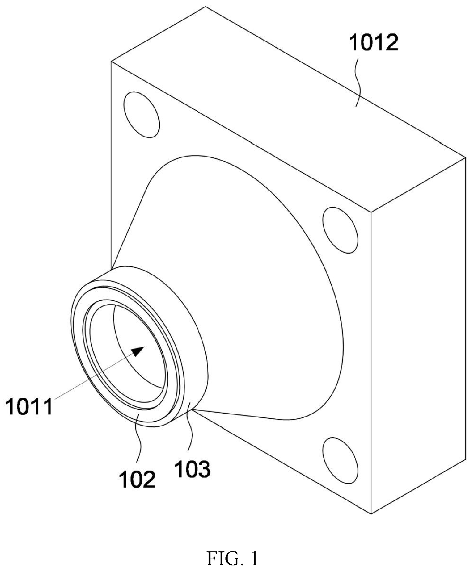

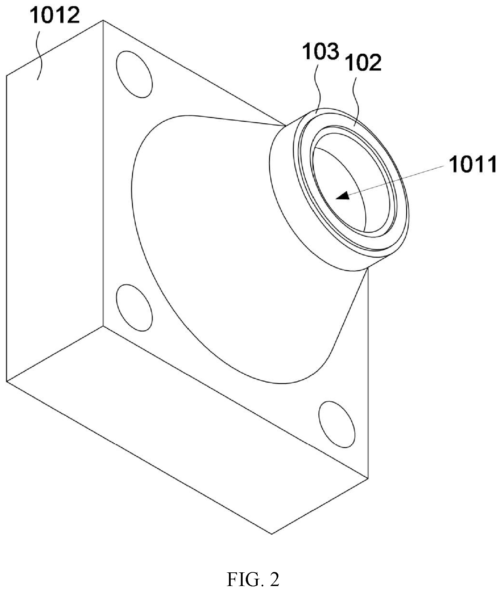

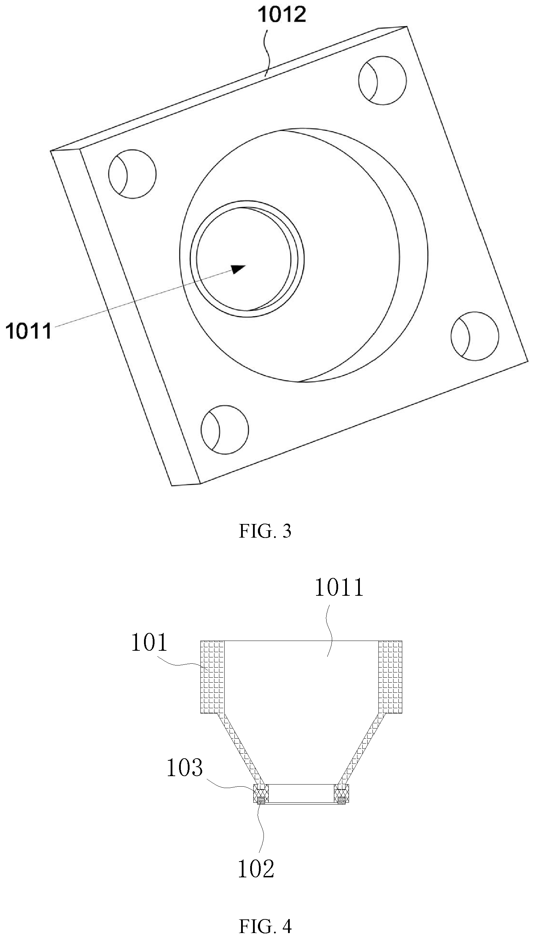

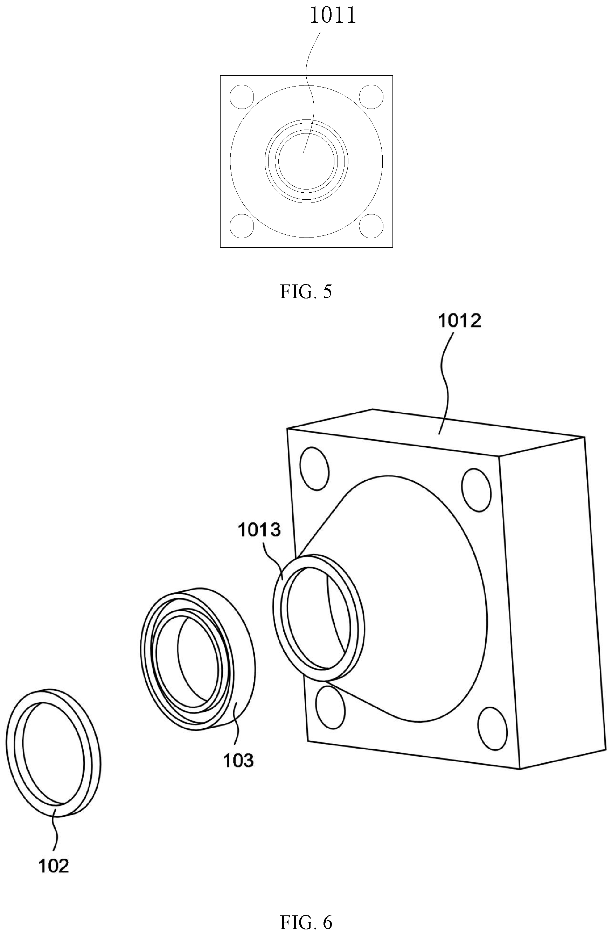

As shown in FIGS. 1, 2, 3, 4, 5, and 6, the invention provides a laser welding assembly. The laser welding assembly includes a welding kit 101 and a temperature sensor 102. The welding kit 101 has a laser incident through-hole 1011 extending through a first end and a second end of the welding kit 101. The first end and the second end are opposite ends of the welding kit 101. The temperature sensor 102 is disposed between the first end of the welding kit 101 and a busbar 201. The temperature sensor 102 has an end connected to the first end of the welding kit 101 and another end abutting with the busbar 201. A surface of the busbar 201 away from the temperature sensor 102 abuts with a cell post 301.

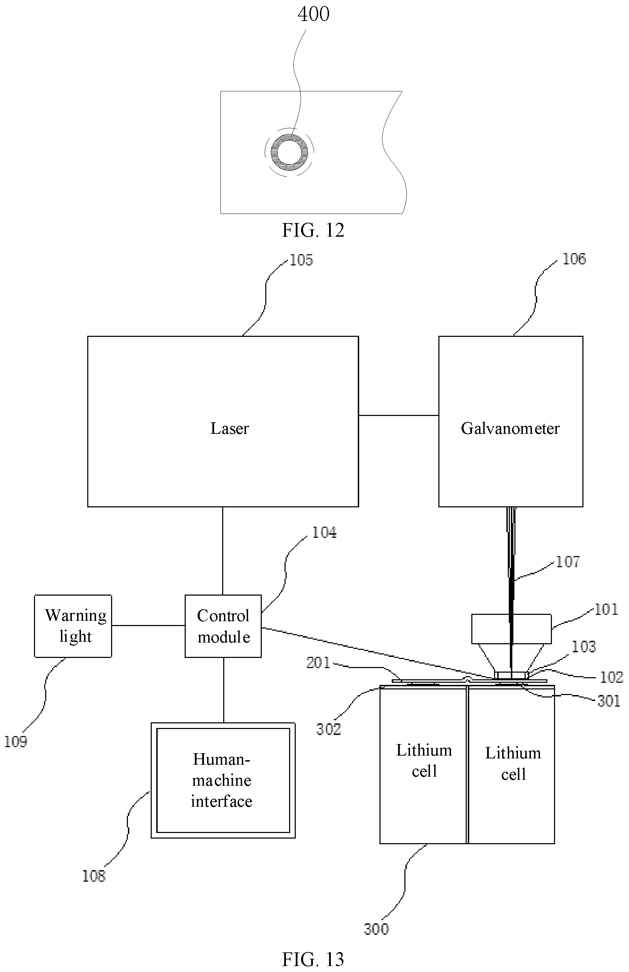

Specifically, during laser welding between the busbar 201 and the cell post 301, the laser emitted by a laser 105 may enter the laser incident through-hole 1011 of the welding kit 101 via a galvanometer 106, and then reach a welding position between the busbar 201 and the cell post 301 through the laser incident through-hole 1011, to realize the laser welding between the busbar 201 and the cell post 301. A cell where the cell post 301 is located may be a lithium cell. As shown in FIG. 13, a cell cover plate 302 is disposed above the lithium cell, and the cell post 301 is provided on the cell cover plate 302.

Meanwhile, the reason why the temperature sensor 102 is selected in the invention, instead of adopting non-contact infrared temperature recognition to collect a temperature at the welding position between the busbar 201 and the cell post 301, is that non-contact infrared temperature recognition exhibits a large temperature fluctuation during laser welding, resulting in a large deviation in temperature collection and low reliability and accuracy; while the temperature sensor 102 exhibits a smaller temperature fluctuation during laser welding.

In addition, the busbar 201 mentioned in the invention may be an aluminum busbar, and the type of the busbar 201 may be selected according to actual applications.

In this embodiment, during the laser welding between the busbar 201 and the cell post 301, the temperature sensor 102 can monitor a temperature at the welding position at any time. When the temperature at the welding position is relatively low, it can be determined that a defect exists in the laser welding between the busbar 201 and the cell post 301. When the temperature at the welding position is relatively high, it can also be determined that a defect exists in the laser welding between the busbar 201 and the cell post 301. When the defect is determined to exist in the laser welding between the busbar 201 and the cell post 301, operation of the laser 105 needs to be halted to confirm a welding state between the busbar 201 and the cell post 301 in time and therefore perform rework. In this way, firmness of each welding position between the busbar 201 and the cell post 301 after the welding can be ensured. Furthermore, the yield rate of the laser welding between the busbar 201 and the cell post 301 can be improved.

The laser welding assembly according to the invention includes the welding kit 101 and the temperature sensor 102. The welding kit 101 has the laser incident through-hole 1011 extending through the first end and the second end of the welding kit 101 that are opposite to each other. The temperature sensor 102 is disposed between the first end of the welding kit 101 and the busbar 201. The end of the temperature sensor 102 is connected to the first end of the welding kit 101, and the other end of the temperature sensor 102 abuts with the busbar 201. The surface of the busbar 201 away from the temperature sensor 102 abuts with the cell post 301. Thus, during the laser welding between the busbar 201 and the cell post 301, the firmness of the welding seam between the busbar 201 and the cell post 301 can be determined in time based on temperature information detected by the temperature sensor 102, and corresponding treatment can be carried out. In this way, the yield rate of the laser welding between the busbar 201 and the cell post 301 can be improved, and the cost of the laser welding between the busbar 201 and the cell post 301 can be lowered.

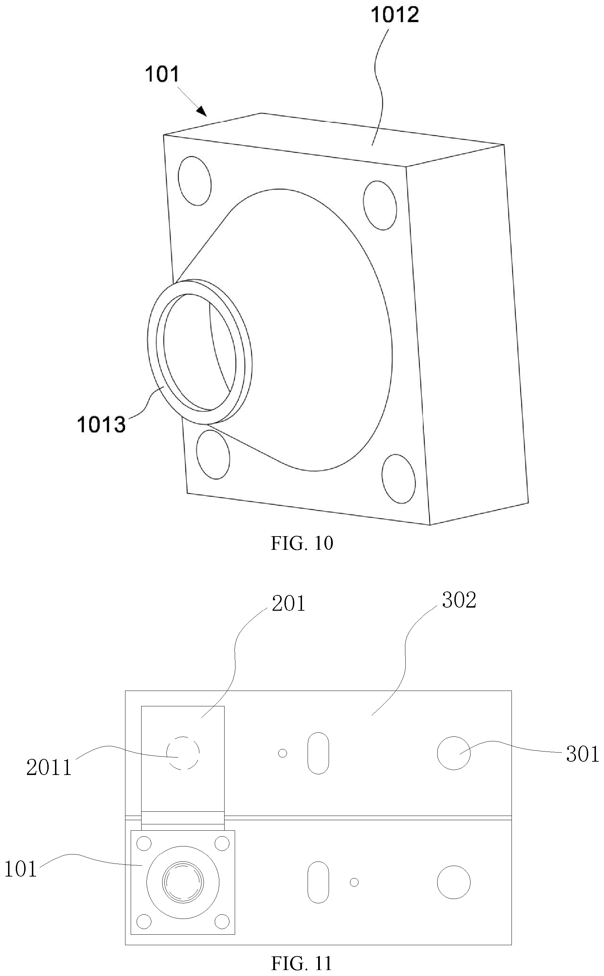

In some embodiments, as shown in FIG. 10, the first end is provided with an abutment portion 1013 connected to an end of the temperature sensor 102, and the second end is provided with a connection portion 1012 configured to be fixedly connected to a welding machine.

In this embodiment, the laser welding assembly may be fixed at the welding machine, and the welding machine may be provided with the laser 105 and the galvanometer 106. When the welding machine uses the laser welding assembly to weld the busbar 201 and the cell post 301, the abutment portion 1013 at the second end of the welding kit abuts against the busbar 201 by the temperature sensor 102. The laser emitted by the laser sequentially passes through the galvanometer 106 and the laser incident through-hole 1011 to realize the laser welding of the busbar 201 and the cell post 301.

The abutment portion may be of a funnel shape, and the connection portion may be of a rectangular shape. The connection portion may have a plurality of through holes, and screws can pass through the through holes to fix the laser welding assembly to the welding machine.

In some embodiments, a distance between an inner ring of the annular temperature sensor 102 and a welding point 400 in the laser incident through-hole 1011 ranges from 2 mm to 10 mm.

Specifically, as shown in FIG. 11, the busbar 201 according to the invention is rectangular, and the cell post 301 is cylindrical. The busbar 201 covers the cell post 301. Therefore, during the laser welding between the busbar 201 and the cell post 301, laser welding needs to be performed around the cell post 301 at a contact position between the busbar 201 and the cell post 301, i.e., at a post region 2011 in FIG. 11. As a result, the welding point 400 of an annular shape as shown in FIG. 12 is formed after the laser welding between the busbar 201 and the cell post 301.

In some embodiments, as shown in FIGS. 1 to 7, the temperature sensor 102 is an annular temperature sensor concentric with the laser incident through-hole 1011.

A laser beam 107 enters the laser incident hole from the second end of the welding kit 101 and reaches the welding point 400 between the busbar 201 and the cell post 301 through the laser incident hole, and the welding point 400 is a ring, inside which the temperature sensor 102 fails to be placed. Therefore, it is necessary to provide the temperature sensor 102 to be annular in the invention to ensure that the temperature sensor 102 can monitor the temperature at the welding position at any time during the laser welding between the busbar 201 and the cell post 301.

In addition, when the annular temperature sensor 102 is disposed at the first end of the welding kit 101, it is necessary to ensure that the distance between the annular temperature sensor 102 and the welding point 400 in the laser incident through-hole 1011 ranges from 2 mm to 10 mm in the invention, to avoid the temperature sensor 102 being excessively close to the laser beam 107, which would cause the temperature sensor 102 to be damaged due to an excessive temperature.

In some embodiments, as shown in FIGS. 1 to 6, a thermal insulation member 103 is disposed between the welding kit 101 and the temperature sensor 102. The thermal insulation member 103 has an end connected to the temperature sensor 102 and another end connected to the welding kit 101.

In this embodiment, the welding kit 101 is a kit made of a metallic material and has good thermal conductivity. To prevent a direct contact between the welding kit 101 and the temperature sensor 102 from affecting the temperature sensor 102 in collecting a temperature of the welding point 400 between the busbar 201 and the cell post 301, a thermal insulation member 103 needs to be disposed between the temperature sensor 102 and the welding kit 101 in the invention, thereby ensuring accuracy of the temperature sensor 102 in collecting a temperature at the welding position.

The thermal insulation member 103 may include at least one of zirconium oxide or silicon oxide.

In some embodiments, the thermal insulation member 103 may be a composite oxide composed of zirconium oxide and silicon oxide, which can ensure that the temperature collected by the temperature sensor 102 at the welding position is not affected by the welding kit 101.

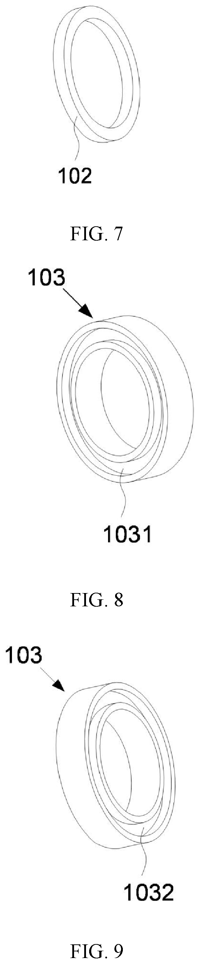

In some embodiments, as shown in FIGS. 8 and 9, the end of the thermal insulation member 103 has a first annular groove 1031 configured to receive the temperature sensor 102, and the other end of the thermal insulation member 103 has a second annular groove 1032 configured to receive the abutment portion 1013 of the first end.

Specifically, by providing the first annular groove 1031 at the end of the thermal insulation member 103 and the second annular groove 1032 at the other end of the thermal insulation member 103, the temperature sensor 102 can be directly embedded in the first annular groove 1031 when assembling the laser welding assembly, and the abutment portion 1013 of the welding kit can be directly embedded in the second annular groove 1032. Thus, during flow production using the laser welding assembly, the laser welding assembly can be quickly moved from one welding area to another by means of the welding machine.

In addition, after the temperature sensor 102 is embedded in the first annular groove 1031, another end of the temperature sensor 102 away from the first annular groove 1031 needs to abut with the busbar 201 to avoid inaccurate temperature detection caused by blocking of the thermal insulation member 103 during the welding.

In some embodiments, the welding kit 101 and the temperature sensor 102 are bonded together using an adhesive.

Specifically, the adhesive may be configured to bond the temperature sensor 102 to the first end of the welding kit 101. In addition to having a good bonding effect, the adhesive also needs to exhibit excellent high temperature resistance, which can thus avoid separation of the temperature sensor 102 from the welding kit 101 due to a high temperature during the laser welding between the busbar 201 and the cell post 301.

When the thermal insulation member 103 is disposed between the welding kit 101 and the temperature sensor 102, the thermal insulation member 103 and the abutment portion 1013 of the welding kit 101 are bonded together with an adhesive. Similarly, the thermal insulation member 103 and the temperature sensor 102 can also be bonded together with an adhesive.

In some embodiments, the temperature sensor 102 includes a PN junction temperature sensor or a platinum resistance temperature sensor.

In this embodiment, the temperature sensor 102 is preferably a PN junction temperature sensor or a platinum resistance temperature sensor.

The PN junction temperature sensor is a device that measures a temperature change by utilizing a temperature characteristic of a semiconductor material. Its operating principle is based on the fact that when a PN junction is forward-biased, an equivalent resistance decreases as a temperature rises, which leads to a change in a voltage across the PN junction. Thus, the PN junction temperature sensor has characteristics of high sensitivity and fast response, and usually completes temperature measurement within a microsecond level.

Specifically, when a forward voltage is applied to the PN junction, it exhibits a low-resistance state with a large forward diffusion current. In contrast, when a reverse voltage is applied to the PN junction, it exhibits a high-resistance state with a very small reverse drift current. Therefore, accurate temperature measurement can be achieved by measuring a forward voltage drop or a reverse current change of the PN junction at different temperatures. In addition, the PN junction temperature sensor also has advantages such as good linearity, small time constant, and fast response speed.

The PN junction temperature sensor has a temperature measurement ranging from -50°C to 150°C. Therefore, when using the PN junction temperature sensor to collect the temperature for the welding point 400 between the busbar 201 and the cell post 301, it is necessary to ensure that a distance between the PN junction temperature sensor and the welding point 400 in the laser incident through-hole 1011 ranges from 2 and 10 mm, to avoid the PN junction temperature sensor being excessively close to the laser beam 107, which would cause the PN junction temperature sensor to be damaged due to an excessive temperature.

The platinum resistance temperature sensor is a sensor that measures a temperature based on a characteristic that a resistance value of platinum metal changes with temperature. Its operating principle is to measure a resistance value of a platinum resistor at different ambient temperatures and calculate a corresponding temperature value according to a predetermined resistance-temperature relationship curve.

A core component of the platinum resistance temperature sensor is an elongated filamentary resistor made of pure platinum. When the ambient temperature changes, a resistance value of a platinum filament changes accordingly, which can then be detected and converted by a circuit system and finally displayed as a temperature value.

In some embodiments, the welding kit 101 includes a welding copper sleeve. In this embodiment, the welding copper sleeve has a funnel-like shape. The temperature sensor 102 is disposed at a bottom of the welding copper sleeve, and the busbar 201 may abut against the cell post 301 by the temperature sensor 102. The laser beam 107 may enter the welding position between the busbar 201 and the cell post 301 through a through hole of the welding copper sleeve.

It should be noted that the welding kit 101 may also be metallic kits made of other materials, which can be specifically selected according to actual applications.

In some embodiments, as shown in FIG. 13, the laser welding assembly further includes a control module 104 and a display module. The control module 104 is electrically connected to the display module, the laser 105, and the temperature sensor 102.

In this embodiment, the control module 104 is configured to control activation and deactivation of the laser 105, and the temperature sensor 102 may be electrically connected to the control module 104. Thus, the temperature collected by the temperature sensor 102 at the welding point 400 between the busbar 201 and the cell post 301 can be transmitted to the control module 104 for calculation and comparison to determine whether a welding defect exists at the welding position. Furthermore, the result can be displayed by the display module.

The display module includes a human-machine interface 108 and a warning light 109. When the welding defect exists at the welding position, the warning light 109 may issue an alert.

In some embodiments, the laser welding defect detection method according to the invention may be performed by the control module 104 of the laser welding assembly.

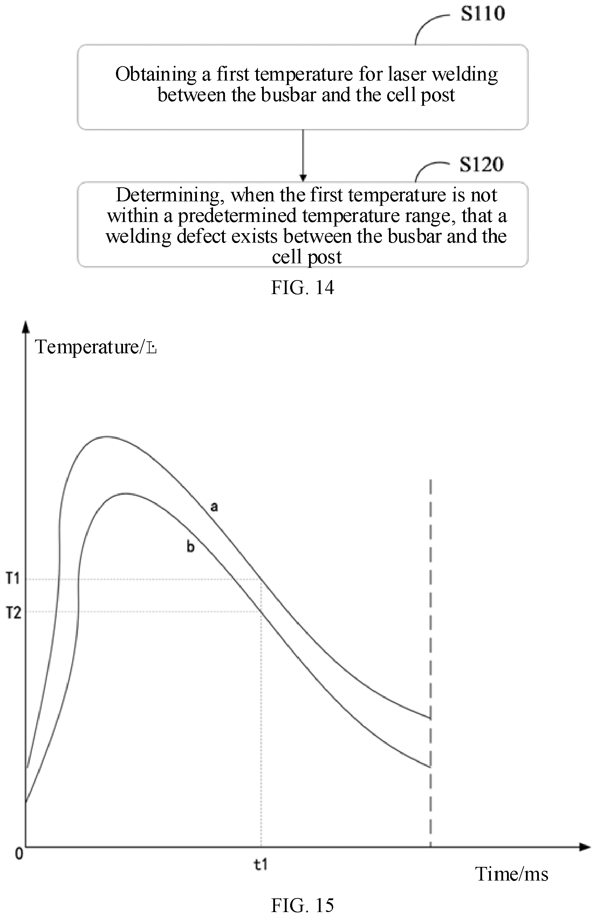

Referring to FIG. 14, FIG. 14 is a schematic flowchart of a laser welding defect detection method according to the invention. As shown in FIG. 14, the invention also provides a laser welding defect detection method. The method includes actions at blocks S110 and S120.

At block S110, a first temperature for laser welding between the busbar and the cell post is obtained.

Specifically, the first temperature is temperature information collected by the temperature sensor 102 at the welding position between the busbar 201 and the cell post 301 during the laser welding between the busbar 201 and the cell post 301. After the first temperature at the welding position between the busbar 201 and the cell post 301 is collected by the temperature sensor 102, it can be transmitted to the control module 104. The control module 104 can then determine whether the welding position is firm based on the first temperature. Thus, operation of the laser 105 can be quickly halted to confirm a welding state between the busbar 201 and the cell post 301 and therefore perform timely rework. In this way, firmness of each welding position between the busbar 201 and the cell post 301 after the welding can be ensured. Furthermore, the yield rate of the laser welding between the busbar 201 and the cell post 301 can be improved.

In some embodiments, the method further includes, subsequent to the action at block S110: determining a welding duration corresponding to the first temperature; and determining a temperature range based on the welding duration.

Specifically, in the invention, when using the first temperature to determine whether a welding defect exists between the busbar 201 and the cell post 301, it can be determined by determining whether the first temperature is within a predetermined temperature range. Meanwhile, the temperature range can be set based on the welding duration corresponding to the first temperature.

In this embodiment, a welding duration of laser welding between the busbar 201 and each cell post 301 may be predetermined, and the welding duration may be divided into a plurality of time periods. Each of the plurality of time periods corresponds to a laser welding temperature range. After obtaining the first temperature, the welding duration of the first temperature may be determined, and a corresponding time period may be determined based on the welding duration. Then, a corresponding temperature range may be determined based on the corresponding time period. Thus, by determining whether the first temperature is within the determined temperature range, it can be determined whether the welding defect exists between the busbar 201 and the cell post 301.

The welding duration may be 3 seconds, and a temperature collection time interval at the welding position may range from 10 ms to 30 ms.

In some embodiments, the determining the temperature range based on the welding duration includes: obtaining, when the laser welding is performed on the busbar and the cell post using a plurality of welding powers, a temperature curve representing variation of temperature for the laser welding with time at each of the plurality of welding powers; and determining a second temperature and a third temperature within the temperature range based on the plurality of temperature curves and the welding duration.

Specifically, in the invention, the laser welding may be performed on the busbar 201 and the cell post 301 pre-using different laser powers, i.e., the plurality of welding powers. The laser welding is performed on the busbar 201 and the cell post 301 at each welding power, temperature collection may be performed using the temperature sensor 102. After obtaining a temperature collected at each welding power, the collected temperature at each welding power can be fitted to obtain the temperature curve representing variation of temperature with time at each welding power. Then, firmness of the welding position at each welding power can be tested to determine the temperature curve that can be adopted. Then, a plurality of temperature curves as shown in FIG. 15 can be obtained, such as first temperature curve a and second temperature curve b.

After determining the plurality of temperature curves at the welding position between the busbar 201 and the cell post 301, a maximum temperature and a minimum temperature, i.e. the second temperature and the third temperature, can be extracted from the plurality of temperature curves at different time points. Then, a temperature between the maximum temperature and the minimum temperature can be taken as a temperature within the temperature range mentioned in the invention. A temperature curve corresponding to the maximum temperature may be the first temperature curve a, and a temperature curve corresponding to the minimum temperature may be the second temperature curve b.

It should be noted that when the laser welding is performed using the plurality of welding powers in the invention, the busbar 201 and the cell post 301 that are adopted may serve as samples, and are not the busbar 201 and the cell post 301 at block S110.

In some embodiments, the determining the second temperature and the third temperature within the temperature range based on the plurality of temperature curves and the welding duration includes: determining, based on the welding duration, a fourth temperature corresponding to each of the plurality of temperature curves; and determining the second temperature and the third temperature from the plurality of fourth temperatures.

Specifically, in the invention, after obtaining the plurality of temperature curves, a temperature value can be extracted from each of the plurality of temperature curves based on the welding duration, i.e., the fourth temperature. Each temperature value is within the temperature range mentioned in the invention. Then, by statistically analyzing the plurality of temperature values extracted, the maximum temperature and the minimum temperature within the temperature range can be obtained, i.e., the second temperature and the third temperature.

At block S120, when the first temperature is not within a predetermined temperature range, it is determined that a welding defect exists between the busbar and the cell post.

Specifically, when the first temperature is within the predetermined temperature range, it can be determined that the laser welding between the busbar 201 and the cell post 301 is in a normal state. When the first temperature is smaller than the minimum temperature within the temperature range, it can be determined that the laser welding between the busbar 201 and the cell post 301 is in an abnormal state. In this case, the operation of the laser 105 needs to be halted to stop welding at the welding position between the busbar 201 and the cell post 301 and issue an alarm. Meanwhile, whether the laser welding between the busbar 201 and the cell post 301 is normal is detected. When it is detected that the laser welding between the busbar 201 and the cell post 301 is abnormal, maintenance and adjustment are required. When the first temperature is greater than the minimum temperature within the temperature range, it can be determined that the laser welding between the busbar 201 and the cell post 301 is in an abnormal state. In this case, the operation of the laser105 needs to be halted to stop welding at the welding position between the busbar 201 and the cell post 301 and issue an alarm. Meanwhile, whether the laser welding between the busbar 201 and the cell post 301 is normal is detected. When it is detected that the laser welding between the busbar 201 and the cell post 301 is abnormal, maintenance and adjustment are required.

Exemplarily, as shown in FIG. 15, after obtaining the first temperature for the laser welding between the busbar 201 and the cell post 301, the welding duration corresponding to the first temperature is determined, such as a duration t1. Then, the temperature range ranging from T2 to T1 can be determined with reference to FIG. 15. By comparing whether the first temperature is within the range of T2 to T1, it can be determined whether the welding defect exists between the busbar 201 and the cell post 301. When the first temperature is within the range of T2 to T1, it can be determined that no welding defect exists between the busbar 201 and the cell post 301. When the first temperature is not within the range of T2 to T1, it can be determined that the welding defect exists between the busbar 201 and the cell post 301.

In the laser welding defect detection method according to the invention, the first temperature for the laser welding between the busbar 201 and the cell post 301 is obtained. When the first temperature is not within the predetermined temperature range, it is determined that the welding defect exists between the busbar 201 and the cell post 301. Thus, during the laser welding between the busbar 201 and the cell post 301, the firmness of the welding seam between the busbar 201 and the cell post 301 can be determined in time based on the temperature information detected by the temperature sensor 102, and the corresponding treatment can be carried out. In this way, the yield rate of the laser welding between the busbar 201 and the cell post 301 can be greatly improved, and the cost of the laser welding between the busbar 201 and the cell post 301 can be lowered.

In some embodiments, the invention also provides a laser welding detection system. The system is configured to perform any embodiment of the laser welding detection method according to the invention.

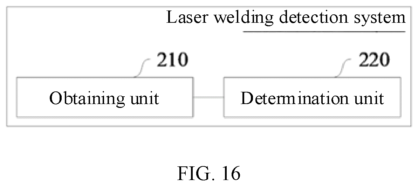

Referring to FIG. 16, FIG. 16 is a schematic block diagram of a laser welding defect detection system according to the invention.

As shown in FIG. 16, the laser welding inspection system includes an obtaining unit 210 and a determination unit 220.

The obtaining unit 210 is configured to obtain a first temperature for the laser welding between the busbar 201 and the cell post 301. The determination unit 220 is configured to determine, when the first temperature is not within a predetermined temperature range, that a welding defect exists between the busbar 201 and the cell post 301.

The laser welding defect detection system according to the invention is configured to perform the actions as follows. The first temperature for the laser welding between the busbar 201 and the cell post 301 is obtained. When the first temperature is not within the predetermined temperature range, it is determined that the welding defect exists between the busbar 201 and the cell post 301. Thus, during the laser welding between the busbar 201 and the cell post 301, the firmness of the welding seam between the busbar 201 and the cell post 301 can be determined in time based on the temperature information detected by the temperature sensor 102, and corresponding processing can be carried out. In this way, the yield rate of the laser welding between the busbar 201 and the cell post 301 can be improved, and the cost of the laser welding between the busbar 201 and the cell post 301 can be lowered.

## Claims

1. A laser welding assembly, comprising:
a welding kit (101) having a laser incident through-hole (1011) extending through a first end and a second end of the welding kit (101), wherein the first end and the second end are opposite ends of the welding kit (101); and
a temperature sensor (102) disposed between the first end of the welding kit (101) and a busbar (201), wherein the temperature sensor (102) has an end connected to the first end of the welding kit (101) and another end abutting with the busbar (201), and wherein a surface of the busbar (201) away from the temperature sensor (102) abuts with a cell post (301).

2. The laser welding assembly according to claim 1, wherein:
the first end is provided with an abutment portion (1013) connected to the end of the temperature sensor (102); and
the second end is provided with a connection portion (1012) configured to be fixedly connected to a welding machine.

3. The laser welding assembly according to claim 1 or 2, wherein a distance between the temperature sensor (102) and a welding point (400) in the laser incident through-hole (1011) ranges from 2 mm to 10 mm.

4. The laser welding assembly according to claim 3, wherein the temperature sensor (102) is an annular temperature sensor concentric with the laser incident through-hole (1011).

5. The laser welding assembly according to any one of claims 1 to 4, wherein a thermal insulation member (103) is further provided between the welding kit (101) and the temperature sensor (102), wherein the thermal insulation member (103) has an end connected to the temperature sensor (102) and another end connected to the welding kit (101).

6. The laser welding assembly according to claim 5, wherein:
the end of the thermal insulation member (103) has a first annular groove (1031) configured to receive the temperature sensor (102); and
the other end of the thermal insulation member (103) has a second annular groove (1032) configured to receive the first end.

7. The laser welding assembly according to any one of claims 1 to 6, wherein:
the temperature sensor (102) comprises a PN junction temperature sensor or a platinum resistance temperature sensor; and/or
the welding kit (101) comprises a welding copper sleeve.

8. A laser welding defect detection method, applied in the laser welding assembly according to any one of claims 1 to 7, the method comprising:
obtaining a first temperature for laser welding between the busbar and the cell post; and
determining, when the first temperature is not within a predetermined temperature range, that a welding defect exists between the busbar and the cell post.

9. The laser welding defect detection method according to claim 8, further comprising, subsequent to said obtaining the first temperature for the laser welding between the busbar and the cell post:
determining a welding duration corresponding to the first temperature; and
determining a temperature range based on the welding duration.

10. The laser welding defect detection method according to claim 9, wherein said determining the temperature range based on the welding duration comprises:
obtaining, when the laser welding is performed on the busbar and the cell post using a plurality of welding powers, a temperature curve representing variation of temperature for the laser welding with time at each of the plurality of welding powers; and
determining a second temperature and a third temperature within the temperature range based on the plurality of temperature curves and the welding duration.

11. The laser welding defect detection method according to claim 10, wherein said determining the second temperature and the third temperature within the temperature range based on the plurality of temperature curves and the welding duration comprises:
determining, based on the welding duration, a plurality of fourth temperatures corresponding to each of the plurality of temperature curves; and
determining the second temperature and the third temperature from the plurality of fourth temperatures.

12. A laser welding detection system, applied to the laser welding defect detection method according to any one of claims 8 to 11.
